# EUROPÄISCHE PATENTSCHRIFT

(11) **EP 1 258 383 B1**
(45) Veröffentlichungstag und Bekanntmachung des Hinweises auf die Patenterteilung: **06.10.2004**
(21) Anmeldenummer: 02010851.0
(22) Anmeldetag: 15.05.2002
(51) Int. Cl.: B60K 35/00

(54) **Fahrzeugrechner-System und Verfahren zur Steuerung einer Auswahlmarkierung in einem Fahrzeugrechner-System**
Vehicle computer system and method for controlling a cursor in a vehicle computer system
Système d'ordinateur pour véhicule et procédé pour controller un curseur dans un système d'ordinateur pour véhicule

(30) Priorität: 18.05.2001 DE 10124237
(43) Veröffentlichungstag der Anmeldung: 20.11.2002
(73) Patentinhaber: Harman Becker Automotive Systems (Becker Division) GmbH, 76307 Karlsbad (DE)
(72) Erfinder: Weimper, Andreas, 70794 Filderstadt (DE); Rössger, Peter, Dr., 70794 Filderstadt (DE)
(74) Vertreter: Lindner, Michael, Dipl.-Ing.

(56) Entgegenhaltungen:
- US-A- 5 270 689
- US-A- 6 023 701

## Beschreibung

Die Erfindung betrifft ein Fahrzeugrechner-System mit einem Monitor zur Darstellung von Auswahlmenüs, Informationen mit Hypertext-Verknüpfungsworten (Hyperlinks) und einer Auswahlmarkierung (Cursor), einem Dreh-/Drücksteller, und einer Cursorsteuervorrichtung, die abhängig von Steuersignalen des Dreh-/Drückstellers den Cursor auf dem Monitor bewegt. Die Erfindung betrifft des weiteren ein Verfahren zur Steuerung einer Auswahlmarkierung in einem Fahrzeugrechner-System.

Fahrzeugrechner-Systeme werden in zunehmendem Maße in Kraftfahrzeugen eingesetzt. Die Anmelderin bietet beispielsweise unter dem Namen "CarPC" ein solches Fahrzeugrechner-System an. Mit diesem System werden verschiedene bisher separat realisierte Systeme, wie Navigationssystem, Radio, etc., gebündelt. Zur Bedienung des Fahrzeugrechner-Systems werden insbesondere sogenannte Dreh-/Drücksteller eingesetzt, wobei mit Hilfe des Drehstellers eine Funktion ausgewählt und über den Drücksteller aktiviert wird.

Mittlerweile ist in Fahrzeugrechner-Systeme auch ein sogenannter Browser integriert, der zur Darstellung von Internetund/oder WAP-Inhalten dient. Eine vorteilhafte Besonderheit von Internet-Inhalten besteht in der Möglichkeit, über sog. Hyperlinks (Hypertext-Verknüpfungsworte) sehr schnell zu anderen verwandten Inhalten zu gelangen. Die Auswahl und Aktivierung dieser Hyperlinks ist bei stationären PCs durch zweidimensionales Bewegen einer PC-Maus und damit des Cursors leicht möglich. Eine Umsetzung dieses Konzepts würde in einem Fahrzeug ein entsprechendes Bedienelement, das eine zweidimensionale Bewegung des Cursors erlaubt, notwendig machen.

Aus ergonomischen Gründen ist ein solches zweidimensionales Bedienelement, beispielsweise in Form einer Kreuzwippe, nicht vorteilhaft. Insbesondere ist eine Positionierung des Cursors auf einem Hyperlink aufgrund von Erschütterungen während der Fahrt nicht ohne weiteres möglich. Darüber hinaus lassen sich auch bestehende Systeme mit einem Dreh-/Drücksteller nicht um die Browser-Funktion erweitern.

Aus der DE 199 44 324 Al ist eine Multifunktions-Bedienvorrichtung zum Einbau in ein Fahrzeug offenbart. Es umfaßt einen Drehschalter zur Auswahl von Funktionen, die innerhalb eines Anzeigefelds auf einer Monitoreinheit darstellbar sind, wobei die Mulitfunktions-Bedienvorrichtung eine Kombination aus dem Drehschalter und mehreren Druckschaltern aufweist. Die Druckschalter sind um den Drehschalter angeordnet und derart gestaltet, daß sie haptisch unterscheidbar sind. Die Anordnung von Anzeigefeldern auf der Monitoreinheit, die den Druckschaltern zugeordnet sind, entspricht dabei zumindest der Anordnung der Druckschalter.

Der Nachteil dieser Mulitfunktions-Bedienvorrichtung ist insbesondere darin zu sehen, daß eine Vielzahl von Druckschaltern neben dem klassischen Drehschalter erforderlich sind.

Aus der US 6,023,701 ist ein Verfahren für ein Computersystem bekannt, mit dem es möglich ist, Hyperlinks aus einer Internet-Seite zu extrahieren und ohne diese Internet-Seiten Informationen auf einem Computerbildschirm darzustellen.

Vor diesem Hintergrund besteht die Aufgabe der vorliegenden Erfindung darin, ein Fahrzeugrechner-System anzugeben, das die Integration einer Browser-Funktion trotz Verwendung eines Dreh-/Drückstellers erlaubt und ohne daß zusätzliche Druckschalter erforderlich wären.

Diese Aufgabe wird bei dem Fahrzeugrechner-System der vorgenannten Art dadurch gelöst, daß die Cursorsteuervorrichtung eine Hyperlink-Erkennungseinheit aufweist, die in einem ersten Betriebsmodus (Link-Modus) die auf dem Monitor dargestellten Hyperlinks erfaßt und den Cursor bei Betätigen des Dreh-/Drückstellers von einem Hyperlink zum nächsten bewegt. Ferner ist die Hyperlink-Erkennungseinheit derart ausgebildet, daß sie einen von der dargestellten Information unabhängigen "Hyperlink" ("Menü") erzeugt, dessen Wahl ein Umschalten in einen zweiten Betriebsmodus (Menü-Modus) ermöglicht.

D.h. mit anderen Worten, daß das Fahrzeugrechner-System die auf dem Monitor dargestellten Browser-Inhalte auf Hyperlinks durchsucht und deren Position am Bildschirm erfaßt. Das Fahrzeugrechner-System extrahiert sozusagen die Hyperlinks aus dem dargestellten Internet-Inhalt und erstellt daraus eine Liste mit den zugehörigen Bildschirm-Koordinaten. Eine Betätigung des Drehstellers führt nun dazu, daß der Cursor von einer Hyperlink-Position zur nächsten bewegt wird, unabhängig davon, wo dieser Hyperlink auf dem Monitor dargestellt ist. Hat der Benutzer den gewünschten Hyperlink erreicht, kann er den entsprechenden Inhalt durch Betätigen des Drückstellers anfordern. Dadurch, daß ein zusätzlicher Hyperlink erzeugt wird, kann durch Anwahl dieses Hyperlinks in einen anderen Betriebsmodus geschaltet werden, ohne daß ein weiteres Bedienelement hierfür erforderlich wäre.

Die vorgenannten Maßnahmen führen folglich zu dem Vorteil, daß der Benutzer einen einfachen eindimensionalen Drehsteller zur Navigation benutzen kann, obgleich der Cursor selbst in zwei Dimensionen bewegt wird. Eine deutlich vereinfachte Bedienung läßt sich damit im Vergleich zu zweidimensionalen Stellelementen, wie Kreuzwippe, etc., erreichen. Darüber hinaus kann auf einen sonst notwendigen Taster (hard key) zum Umschalten in den Menümodus verzichtet werden. Der von der Hyperlink-Erkennungseinheit erzeugte Hyperlink, der nicht Teil der dargestellten Internet-Seite ist, läßt sich durch Drehen des Dreh-/Drückstellers auswählen und aktivieren.

Ein weiterer Vorteil ist darin zu sehen, daß bestehende Fahrzeugrechner-Systeme, die den genannten Dreh-/Drücksteller verwenden, um eine Browser-Funktion aufgerüstet werden können.

In einer bevorzugten Weiterbildung ist das Fahrzeugrechner-System derart ausgebildet, daß beim Umschalten von dem Menü-Modus in den Link-Modus ein auf dem Monitor dargestelltes Auswahlmenü aus dem Bildschirm herausfährt und beim Umschalten von dem Link-Modus in den Menü-Modus in den Bildschirm hineinfährt.

Dies hat den Vorteil, daß das Auswahlmenü die Darstellung von Information auf dem Monitor nicht behindert. Um dem Anwender jedoch auch im Link-Modus anzuzeigen, welche Menüpunkte im Auswahlmenü vorhanden sind, ist es bevorzugt, für jeden Menüpunkt des Auswahlmenüs ein Symbol, insbesondere ein Buchstabe oder ein Bild, darzustellen. Diese Darstellung nimmt deutlich weniger Platz in Anspruch und behindert somit die Darstellung von Information nur unwesentlich. Dennoch hat der Anwender über die Darstellung von Symbolen jederzeit die Möglichkeit, sich über die zur Verfügung stehenden Menüpunkte zu informieren.

Die der Erfindung zugrunde liegende Aufgabe wird auch von einem Verfahren zur Steuerung einer Auswahlmarkierung in einem Fahrzeugrechner-System dadurch gelöst, daß in einem ersten Betriebsmodus (Link-Modus) die auf dem Monitor dargestellten Hyperlinks erfaßt werden und daß der Cursor bei einer Betätigung des Dreh-/Drückstellers von einem Hyperlink zum nächsten bewegt wird, um eine Auswahl eines der Hyperlinks zu ermöglichen. Ferner wird im Link-Modus ein zusätzlicher Hyperlink auf dem Monitor dargestellt, der durch Betätigung des Dreh-/Drückstellers auswählbar ist und ein Umschalten von dem Link-Modus in einen Menü-Modus ermöglicht.

Wie zuvor im Zusammenhang mit dem erfindungsgemäßen Fahrzeugrechner-System angegeben, liegt der Vorteil dieses erfindungsgemäßen Verfahrens darin, daß mit einem einfachen Dreh-/Drücksteller eine Navigation auf einer Internet- oder WAP-Seite möglich ist. Im übrigen werden die bereits zuvor ausgeführten weiteren Vorteile mit diesem Verfahren erreicht.

Es ist bevorzugt, beim Umschalten in den Link-Modus das Auswahlmenü aus dem Monitor herauszufahren und beim Umschalten in den vorhergehenden Modus in den Monitor hineinzufahren. Weiter bevorzugt wird im Link-Modus für jeden Menüpunkt des Auswahlmenüs ein Symbol am Monitorrand dargestellt, wobei der aktivierte Menüpunkt hervorgehoben wird, vorzugsweise farbig hervorgehoben wird.

Diese Maßnahmen führen zu einer verbesserten ergonomischen Bedienung des Fahrzeugrechner-Systems. Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand eines Ausführungsbeispiels mit Bezug auf die Zeichnung näher erläutert. Dabei zeigen:
- Fig. 1: ein schematisches Blockschaltbilddiagramm eines Fahrzeugrechner-Systems;
- Fig. 2: eine schematische Darstellung eines Bildschirminhalts des Fahrzeugrechner-Systems;
- Fig. 3A: eine schematische Darstellung eines Internet-Inhalts, und
- Fig. 3B: eine Darstellung des in Fig. 3B gezeigten Internet-Inhalts reduziert auf die dort enthaltenen Hyperlinks zur Erläuterung des erfindungsgemäßen Verfahrens.

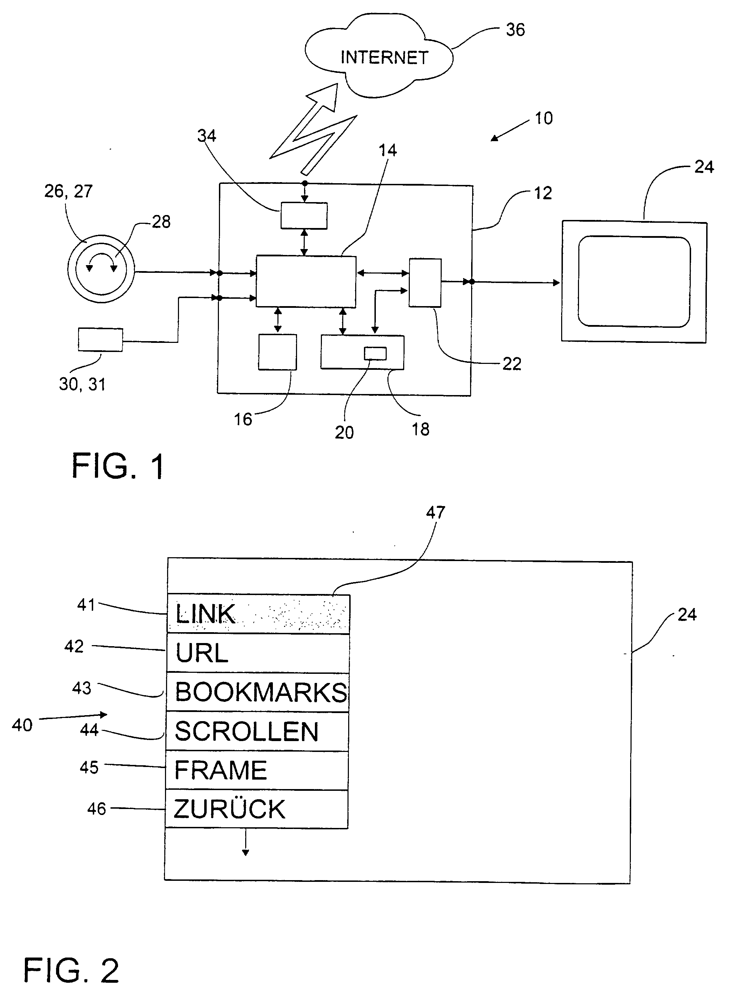

In Fig. 1 ist ein Fahrzeugrechner-System als Blockschaltdiagramm dargestellt und mit dem Bezugszeichen 10 gekennzeichnet. Das Fahrzeugrechner-System 10 umfaßt einen Fahrzeugrechner 12, der aus den üblichen Komponenten eines PCs aufgebaut ist. Hierzu gehören beispielsweise Mikroprozessor, Speicher, Festplatten, Schnittstellen, etc.

In der vorliegenden Fig. 1 sind funktionale Komponenten des Fahrzeugrechners 12 dargestellt. So umfaßt der Fahrzeugrechner 12 beispielsweise eine Rechnereinheit 14, die u.a. für die Verwaltung von Daten und den Ablauf von Softwareprogrammen zuständig ist. Mit der Rechnereinheit 14 kommuniziert eine Speichereinheit 16, die unterschiedliche Speichermedien, beispielsweise RAM, EPROM, Festplattenspeicher etc. umfassen kann. Die Speichereinheit 16 dient zur Speicherung von Programmcode (Software) als auch zum Speichern von temporären Daten.

Mit der Rechnereinheit 14 kommuniziert ferner eine Cursorsteuervorrichtung 18, die eine Hyperlink-Erkennungseinheit 20 aufweist.

Die Cursorsteuervorrichtung 18 kommuniziert mit einer Bildschirmtreibereinheit 22, die darüber hinaus auch von der Rechnereinheit 14 Daten empfangen kann.

Die Treibereinheit 22 dient dazu, bestimmte Inhalte auf einem Bildschirm 24 darzustellen.

Zur Bedienung des Fahrzeugrechners 12 verfügt das Fahrzeugrechner-System 10 über ein Bedienelement 26, das im vorliegenden Ausführungsbeispiel als sogenannter Dreh-/Drücksteller 27 ausgebildet ist. Dieser Dreh-/Drücksteller 27 läßt sich einerseits durch Drehen in Richtung des Pfeils 28 und andererseits durch Drücken senkrecht zur Zeichenebene betätigen. Ein solches Stellelement wird heutzutage bereits im Zusammenhang mit Navigationssystemen in Fahrzeugen eingesetzt.

Das Fahrzeugrechner-System 10 umfaßt ferner ein weiteres Bedienelement 30, das als Tastschalter 31 ausgebildet ist.

Beide Bedienelemente 26, 30 liefern entsprechende Signale an die Rechnereinheit 14, wobei das Bedienelement 26 insgesamt zwei unterschiedliche Signale liefert, nämlich ein Signal von dem Drehsteller und ein Signal von dem Drücksteller.

Der Fahrzeugrechner 12 weist eine Eingabe-/Ausgabe-Einheit 34 (E/A-Einheit) auf, die eine Verbindung ins Internet 36, beispielsweise über ein Mobilfunksystem (GMS, GPRS, UMTS) ermöglicht. Die Steuerung dieser E/A-Einheit 34 erfolgt über die Rechnereinheit 14.

Das Fahrzeugrechner-System 10 ist die Steuerzentrale für eine Vielzahl von unterschiedlichen Kommunikationsdiensten in einem Fahrzeug, wobei hier beispielhaft ein Navigationssystem, ein Telefonsystem oder ein Internet-Browser zu nennen sind. Aus Übersichtlichkeitsgründen sind die für ein Navigationssystem oder Telefonsystem notwendigen Komponenten in Fig. 1 nicht dargestellt.

Zur Auswahl und Bedienung der verschiedenen Funktionen des Fahrzeugrechner-Systems wird dem Benutzer ein Auswahlmenü auf dem Bildschirm 24 dargestellt. Ein solches Auswahlmenü ist in Fig. 2 gezeigt und mit dem Bezugszeichen 40 gekennzeichnet. Dieses Auswahlmenü 40 wird von der Rechnereinheit 14 erzeugt und über die Treibereinheit 22 an den Bildschirm 24 übermittelt.

Rein beispielhaft sind im vorliegenden Ausführungsbeispiel insgesamt sechs Menüpunkte dargestellt, die zur Bedienung eines Internet-Browsers benötigt werden. Selbstverständlich lassen sich weitere Menüpunkte vorsehen.

Der erste Menüpunkt 41, der "Link" genannt ist, dient dazu, in einen Link-Modus zu wechseln, der noch beschrieben wird. Der Menüpunkt "URL" 42 ermöglicht nach Aktivierung die Eingabe von Internet-Adressen, der Menüpunkt "Bookmarks" 43 ermöglicht die Darstellung einer Liste von abgelegten Bookmarks bzw. Lesezeichen, die ausgewählt werden können. Zum Blättern in dem auf dem Bildschirm 24 dargestellten Inhalt dient der Menüpunkt "Scrollen" 44, während der Menüpunkt "Frame" 45 den Wechsel zwischen auf dem Bildschirm dargestellten Internet-Rahmen zuläßt. Schließlich ist ein Menüpunkt "Zurück" 46 vorgesehen, der einen Wechsel in die nächsthöhere Menüebene erlaubt.

Die Auswahl und die Aktivierung der vorgenannten Menüpunkte 41 bis 46 erfolgt mit Hilfe des Dreh-/Drückstellers 27, wobei durch Drehen des Drehstellers eine Auswahlmarkierung 47 von einem Menüpunkt zum nächsten bewegt werden kann. Die Aktivierung eines ausgewählten Menüpunkts erfolgt dann durch Drücken des Drückstellers 27.

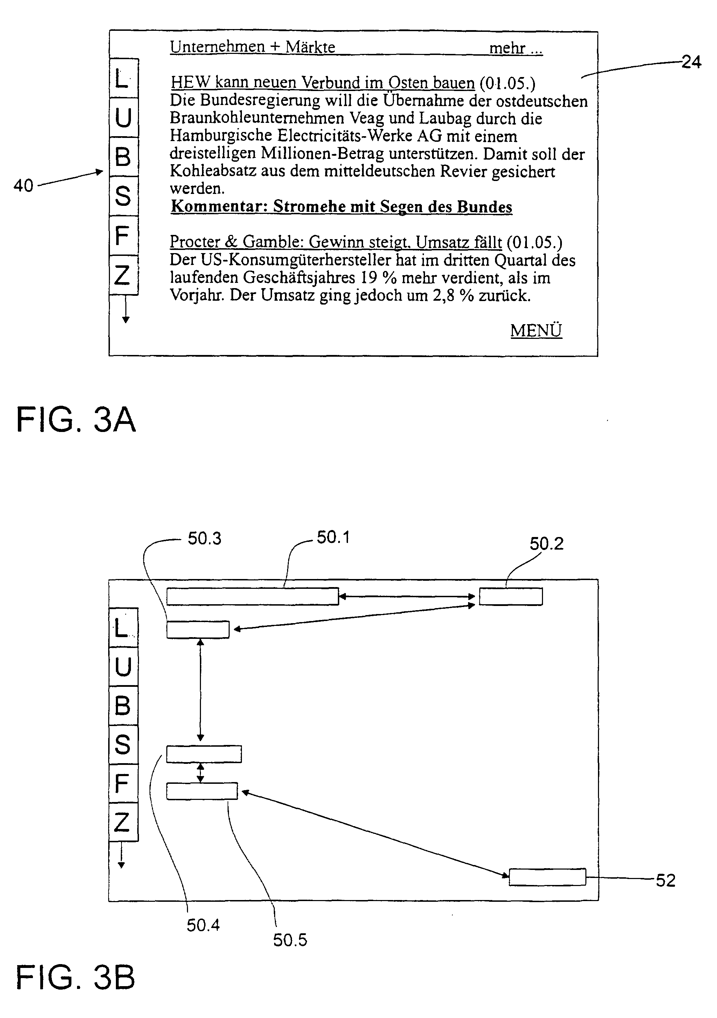

Bei der in Fig. 2 gezeigten Darstellung des Auswahlmenüs 40 ist die Rechnereinheit 14 in einem Menü-Modus. Wird beispielsweise der erste Menüpunkt 41 aktiviert, schaltet die Rechnereinheit 14 in den bereits genannten Link-Modus. Um zur Darstellung einer Internet-Seite möglichst viel Platz auf dem Bildschirm 24 zur Verfügung zu haben, fährt das Auswahlmenü aus dem Bild hinaus, so lange bis nur noch ein Buchstabe, nämlich der Anfangsbuchstabe des entsprechenden Menüpunkts, zu sehen ist. Dies ist in Fig. 3A dargestellt. Dort ist das Auswahlmenü 40 in der Breite auf einen Buchstaben reduziert. Es versteht sich, daß nicht nur Buchstaben, sondern auch graphische Symbole darstellbar sind, die dem Benutzer optisch vermitteln können, um welchen Menüpunkt es sich handelt.

Wird in den Link-Modus durch Auswahl des Menüpunkts 41 gewechselt, erscheint auf dem Bildschirm 24 eine Internet-Seite bzw. eine WAP-Seite mit dem entsprechenden Internet-Inhalt. Die Besonderheit solcher Internet-Seiten (Seiten im html-Format) besteht darin, daß Hypertext-Verknüpfungsworte (auch Hyperlinks genannt) darstellbar sind, die ein sehr schnelles Wechseln zu anderen Internet-Seiten ermöglichen. In Fig. 3A sind beispielhaft einige Hyperlinks angegeben und durch Unterstreichung gekennzeichnet.

Bei üblichen PCs erfolgt die Auswahl dieser Hyperlinks unter Zuhilfenahme der Tastatur oder durch Bewegen eines Cursors mit Hilfe einer Computermaus, die in zwei Dimensionen bewegt werden kann. Damit läßt sich der Cursor in jede Position auf dem Bildschirm 24 führen.

Eine solche Steuerung des Cursors ist jedoch im vorliegenden Fall bei einem Fahrzeugrechner-System mit einem Dreh-/Drücksteller 27 nicht möglich, da dieses Bedienelement 26 die Bewegung eines Cursors nur in einer Richtung ermöglicht. Um dennoch eine Auswahl der Hyperlinks auf dem Bildschirm 24 zu ermöglichen, analysiert die Hyperlink-Erkennungseinheit 20 der Cursorsteuervorrichtung 18 den auf dem Bildschirm 24 dargestellten Inhalt und erfaßt die dargestellten Hyperlinks und deren Position auf dem Bildschirm. Diese Information wird beispielsweise in Form einer Liste abgelegt und dient der Cursorsteuervorrichtung 18 zur Bewegung des Cursors bzw. der Auswahlmarkierung.

In Fig. 3B ist in schematischer Darstellung das Ergebnis der Analyse der Internet-Seite von Fig. 3A dargestellt, wobei die Hyperlinks in Form von Kästen 50 angegeben sind. An dieser Stelle sei angemerkt, daß diese Darstellung nur zur Erläuterung des Verfahrens dient. Nach dem Umschalten von dem Menü-Modus in den Link-Modus und der zuvor erwähnten Analyse des Internet-Inhalts auf dem Bildschirm 24 durch die Hyperlink-Erkennungseinheit 20 bewegt die Cursorsteuervorrichtung 18 den Cursor auf den von oben gesehen ersten Hyperlink 50.1. Dreht nun der Benutzer den Drehsteller 27 im Uhrzeigersinn, führen die entsprechenden an die Rechnereinheit 14 übermittelten Signale in der Cursorsteuervorrichtung 18 dazu, daß die Auswahlmarkierung zu dem nächsten Hyperlink 50.2 in der zuvor erstellten Hyperlink-Liste weiter. Ein weiteres Drehen des Drehstellers 27 bewegt dann den Cursor zu dem Hyperlink 50.3, dann zu 50.4 und schließlich zu dem Hyperlink 50.5, wie dies durch Pfeile dargestellt ist. Hat der Benutzer den gewünschten Hyperlink mit dem Cursor markiert, kann er diesen durch Drücken des Dreh-/Drückstellers 27 aktivieren, was zur Folge hat, daß eine neue Internet-Seite über das Internet 36 angefordert und anschließend auf dem Bildschirm 24 dargestellt wird. Für diese neue Internet-Seite wird wiederum eine Analyse und Erfassung von Hyperlinks durchgeführt, die dann durch Betätigen des Drück-/Drehstellers 27 auswählbar sind.

Wie in Fig. 3B gut zu erkennen, liegen die Hyperlinks 50 an den unterschiedlichsten Stellen auf dem Bildschirm 24. Dennoch ist es möglich, jeden dieser Hyperlinks 50 durch Betätigen eines eindimensionalen Bedienelements auszuwählen.

Um wieder in den Menü-Modus zurück zu gelangen, muß der Benutzer das Bedienelement 30 drücken. Dies hat zur Folge, daß das Auswahlmenü 40 langsam in das Bild fährt, bis die in Fig. 2 gezeigte Darstellung erreicht ist.

Alternativ zu der Betätigung des Bedienelements 30 ist es bevorzugt möglich, einen von dem Internet-Inhalt unabhängigen eigenen Hyperlink zu generieren und an einer bestimmten feststehenden Stelle auf dem Bildschirm darzustellen. Dieser eigene Hyperlink ist in Fig. 3B mit 52 gekennzeichnet und in Fig. 3A mit "MENÜ" bezeichnet. Dieser eigene Hyperlink 52 wird in die Liste der erfaßten Internet-Hyperlinks aufgenommen und läßt sich durch Drehen des Drehstellers 27 auswählen. Ein Aktivieren des Hyperlinks 52 führt dann zu einem Umschalten zurück in den Menü-Modus und nicht wie bei den zuvor genannten Hyperlinks 50 zur Darstellung einer neuen Internet-Seite.

Mit Hilfe dieser Lösung ist es möglich, auf das Bedienelement 30 zu verzichten, so daß sich der mechanische Aufwand und der Platzbedarf für das Fahrzeugrechner-System 10 reduziert. Selbstverständlich könnten neben diesem Hyperlink "MENÜ" weitere eigene Hyperlinks generiert werden, um zusätzliche Funktionen, beispielsweise Scrollen (oben, unten) schnell erreichbar bereitzustellen.

Zusammenfassend kann damit festgestellt werden, daß die Hyperlink-Erkennungseinheit den Einsatz eines eindimensionalen Bedienelements (Drehsteller) zur Auswahl von Hyperlinks in einer Internet-Seite ermöglicht. Ein zweidimensionales Bedienelement, wie beispielsweise eine Kreuzwippe, ein Joystick etc., ist somit entbehrlich mit dem Ergebnis, daß auch bereits bestehende Systeme umrüstbar sind bzw. die Integration einer Browser-Funktion keinen konstruktiven Mehraufwand gegenüber bisherigen Systemen bedeutet.

## Patentansprüche

1. Fahrzeugrechner-System mit einem Monitor (24) zur Darstellung von Auswahlmenüs (40), Informationen mit Hyperlinks (50) und einem Cursor (47), einem Dreh-/Drücksteller (26, 27), und einer Cursorsteuervorrichtung (18), die abhängig von Steuersignalen des Dreh-/Drückstellers (26, 27) den Cursor (47) auf dem Monitor (24) bewegt, **dadurch gekennzeichnet, daß** die Cursorsteuervorrichtung (18) eine Hyperlink-Erkennungseinheit (20) aufweist, die im Link-Modus die auf dem Monitor dargestellten Hyperlinks (50) erfaßt und den Cursor (47) bei Betätigung des Dreh-/Drückstellers (26, 27) von einem Hyperlink (50) zum nächsten bewegt, und die Hyperlink-Erkennungseinheit (20) einen von der dargestellten Information unabhängigen Hyperlink "MENÜ" (52) erzeugt, dessen Wahl ein Umschalten in dem Menü-Modus ermöglicht.

2. Fahrzeugrechner-System nach Anspruch 1, **dadurch gekennzeichnet, daß** beim Umschalten von dem Menü-Modus in den Link-Modus ein auf dem Monitor (24) dargestelltes Auswahlmenü (40) aus dem Bildschirm herausfährt und beim Umschalten von dem Link-Modus in den Menü-Modus in den Bildschirm fährt.

3. Fahrzeugrechner-System nach Anspruch 2, **dadurch gekennzeichnet, daß** im Link-Modus für jeden Menüpunkt (41-46) des Auswahlmenüs (40) ein Symbol, insbesondere ein Buchstaben oder ein Bild, dargestellt wird.

4. Verfahren zur Steuerung einer Auswahlmarkierung in einem Fahrzeugrechner-System, das einen Monitor (24) zur Darstellung von Auswahlmenüs (40), Informationen mit Hyperlinks und dem Cursor, einen Dreh-/Drücksteller (27), und eine Cursorsteuervorrichtung (18), die abhängig von Steuersignalen des Dreh-/Drückstellers den Cursor auf dem Monitor bewegt, wobei im Link-Modus die auf dem Monitor (24) dargestellten Hyperlinks (50) erfaßt werden und der Cursor (47) bei einer Betätigung des Dreh-/Drückstellers (26) von einem Hyperlink zum nächsten bewegt wird, um eine Auswahl eines der Hyperlinks zu ermöglichen, **dadurch gekennzeichnet, daß** im Link-Modus ein zusätzlicher Hyperlink (52) auf dem Monitor (24) dargestellt wird, der durch Betätigung des Dreh-/Drückstellers auswählbar ist und ein Umschalten von dem Link-Modus in einen Menü-Modus ermöglicht.

5. Verfahren nach Anspruch 4, **dadurch gekennzeichnet, daß** beim Umschalten in den Link-Modus das Auswahlmenü aus dem Monitor (24) herausfährt und beim Umschalten in den vorhergehenden Modus in den Monitor hereinfährt.

6. Verfahren nach Anspruch 5, **dadurch gekennzeichnet, daß** im Link-Modus für jeden Menüpunkt des Auswahlmenüs (40) ein Symbol am Monitorrand dargestellt wird, wobei der aktivierte Menüpunkt hervorgehoben wird, vorzugsweise farbig hervorgehoben wird.

7. Verfahren nach einem der Ansprüche 4 bis 6, **dadurch gekennzeichnet, daß** das Auswahlmenü (40) zumindest einige der folgenden Menüpunkte (41-46) enthält: Link, Zurück, Vorwärts, Abbrechen, Aktualisieren, Startseite, Bookmarks oder Lesezeichen, Verlauf, URL eingeben, Schriftgröße größer/kleiner, Scrollen nach oben/unten, Scrollen nach links/rechts, Offlinebetrieb bzw. Verbindung trennen, Frame-Auswahl, Bereich oder Frame, Einstellungen temporäre Internetdateien, Einstellungen Verlauf.

## Claims

1. In-car computing system comprising a display screen (24) for displaying selection menus (40), information containing hyperlinks (50) and a cursor (47), a rotary-/push button switch (26, 27), and a cursor control device (18) adapted to move the cursor on the display screen (24) in response to control signals from the rotary-/push button switch (26, 27), **characterized in that** the cursor control device (18) comprises a hyperlink detecting unit (20), which in the link mode detects the hyperlinks (50) displayed on the display screen and moves said cursor (47) from one hyperlink to the next when operating said rotary-/push button switch (26, 27), and said hyperlink detection unit (20) generates a hyperlink "menu" (52) independent of the information displayed, the selection of said hyperlink allows switching in the menu mode.

2. The in-car computing system of claim 1, **characterized in that** a selection menu (40) displayed on the display screen (24) drives out of the screen when switching from the menu mode to the link mode, and drives into the screen when switching from the link mode to the menu mode.

3. The in-car computing system of claim 2, **characterized in that** a symbol, preferably a letter or a picture, is displayed for each menu item of the selection menu in the link mode.

4. Method for controlling a selection mark in an in-car computing system, which comprises a display screen (24) for displaying selection menus (40), information containing hyperlinks and a cursor, a rotary-/push button switch (27), and a cursor control device (18), which moves said cursor on the display screen in response to control signals from said rotary-/push button switch, wherein in the link mode said hyperlinks displayed on the screen (24) are detected and said cursor (47) is moved from one hyperlink to the next when actuating said rotary-/push button switch (26) to allow the selection of one of said hyperlinks, **characterized in that** in the link mode an additional hyperlink (52) is displayed on the display screen (24), which allows its selection by actuating said rotary-/push button switch and allows a switching from said link mode in said menu mode.

5. Method of claim 4, **characterized in that** when switching to the link mode said selection menu drives out of said display screen (24) and drives into said screen when switching to the other mode.

6. Method of claim 5, **characterized in that** in the link mode a symbol is displayed at the screen margin for each menu item of the selection menu (40), the activated menu item being highlighted, preferably by colour.

7. Method of any of claims 4 through 6, **characterized in that** said selection menu (40) contains at least some of the following menu items (41-46): link, back, forward, cancel, update, starting page, bookmarks, progression, URL input, front size larger/smaller, scroll up/down, scroll left/right, off line connection termination, frame selection, area of frame, setting temporary internet files, setting progression.

## Revendications

1. Ordinateur pour véhicule, comprenant un moniteur (24) destiné à afficher des menus (40), des informations accompagnées de liens hypertexte (50), et un curseur (47), une molette de sélection par poussée (26, 27) et un dispositif de commande du curseur (18) qui, en fonction de signaux de commande de la molette de sélection par poussée (26, 27), déplace le curseur (47) sur le moniteur (24), **caractérisé en ce que** le dispositif de commande du curseur (18) comporte une unité de reconnaissance de liens hypertexte (20) qui, en mode lien, saisit les liens hypertexte (50) affichés sur le moniteur et déplace le curseur (47), lorsque la molette de sélection par poussée (26, 27) est actionnée d'un lien hypertexte (50) vers le suivant, et **en ce que** l'unité de reconnaissance de liens hypertexte (20) génère un lien hypertexte (52) ("MENU"), indépendant de l'information affichée, dont la sélection permet le passage en mode menu.

2. Ordinateur pour véhicule selon la revendication 1, **caractérisé en ce que**, lors du passage du mode menu en mode lien, un menu (40) affiché sur le moniteur sort de l'écran et, lors du passage du mode lien en mode menu, pénètre dans l'écran.

3. Ordinateur pour véhicule selon la revendication 2, **caractérisé en ce qu'**en mode lien, pour chaque élément (41-46) du menu, un symbole est affiché, en particulier une lettre ou une image.

4. Procédé de commande d'un marquage de sélection dans un ordinateur pour véhicule, comprenant un moniteur (24) destiné à afficher des menus (40), des informations accompagnées de liens hypertexte (50), et un curseur, une molette de sélection par poussée (26, 27) et un dispositif de commande du curseur (18) qui, en fonction de signaux de commande de la molette de sélection par poussée, déplace le curseur sur le moniteur, les liens hypertexte (50) affichés sur le moniteur (24) étant saisis, en mode lien, et le curseur (47), lorsque la molette de sélection par poussée (26, 27) est actionnée, étant déplacé d'un lien hypertexte (50) vers le suivant, afin de permettre une sélection de l'un des liens hypertexte, **caractérisé en ce qu'**en mode lien, un lien hypertexte supplémentaire (52) s'affiche sur le moniteur (24) et peut être sélectionné en actionnant la molette de sélection par poussée et permet de passer du mode lien en un mode menu.

5. Procédé selon la revendication 4, **caractérisé en ce que** lors du passage en mode lien, le menu affiché sur le moniteur (24) sort de l'écran et, lors du passage au mode précédent, celui-ci pénètre dans l'écran.

6. Procédé selon la revendication 5, **caractérisé en ce qu'**en mode lien, pour chaque élément du menu (40), un symbole est affiché sur le bord du moniteur, l'élément de menu activé étant mis en surbrillance, de préférence en surbrillance et en couleur.

7. Procédé selon l'une des revendications 4 à 6, **caractérisé en ce que** le menu (40) contient au moins certains des éléments suivants (41-46) : lien, retour, page suivante, arrêter, actualiser, page de démarrage, favoris ou signets, historique, entrée d'URL, augmenter/réduire la police, défiler vers le haut/bas, défiler vers la gauche/droite, fonctionnement hors connexion, interrompre la communication, choix du cadre, avec ou sans cadre, paramétrage de données Internet temporaires, paramétrage de l'historique.
